# EUROPEAN PATENT SPECIFICATION

(11) **EP 3 361 834 B1**
(45) Date of publication and mention of the grant of the patent: **08.12.2021**
(21) Application number: 18155102.9
(22) Date of filing: 05.02.2018
(51) Int. Cl.: H05B 47/185, H05B 47/21, H05B 47/14, H02J 5/00, H02J 1/12

(54) **EXTRA-LOW VOLTAGE OUTDOOR LIGHTING SYSTEM, LUMINAIRE, POWER SUPPLY AND ASSEMBLY AND METHOD OF PROVIDING OUTDOOR ILLUMINATION**
KLEINSTSPANNUNGSAUSSENBELEUCHTUNGSSYSTEM, LEUCHTE, STROMVERSORGUNG UND ANORDNUNG SOWIE VERFAHREN ZUR BEREITSTELLUNG EINER AUSSENBELEUCHTUNG
SYSTÈME D'ÉCLAIRAGE D'EXTÉRIEUR EXTRA BASSE TENSION, LUMINAIRE, ALIMENTATION ET ENSEMBLE ET PROCÉDÉ PERMETTANT DE FOURNIR UN ÉCLAIRAGE D'EXTÉRIEUR

(30) Priority: 13.02.2017 NL 2018358
(43) Date of publication of application: 15.08.2018
(73) Proprietor: In-Lite Design B.V., 4207 HB Gorinchem (NL)
(72) Inventor: VREEKEN, Adriaan Peter, 4207 HB Gorinchem (NL); VREEKEN, Roelof, 4207 HB Gorinchem (NL); SMETS, Frank Gerardus Maria, 4207 HB Gorinchem (NL); VAN KLEEF, Thomas Aimé Adriaan, 4207 HB Gorinchem (NL)
(74) Representative: Van Breda, Jacobus

(56) References cited:
- US-A1- 2007 222 399
- US-A1- 2012 091 900
- PINOMAA A ET AL: "Power-line communication-based network architecture for LVDC distribution system", POWER LINE COMMUNICATIONS AND ITS APPLICATIONS (ISPLC), 2011 IEEE INTERNATIONAL SYMPOSIUM ON, IEEE, 3 April 2011 (2011-04-03), pages 358-363, XP031864625, DOI: 10.1109/ISPLC.2011.5764422 ISBN: 978-1-4244-7751-7

## Description

### Field of the invention

The present invention relates to an extra-low voltage outdoor lighting system. The invention also relates to a method of providing extra-low voltage outdoors illumination.

### Background of the invention

Extra-low voltage outdoor lighting systems are generally known. Such systems are typically used to provide illumi-nation of scenery around homes, such as gardens, patios or otherwise. Outdoor lighting systems used around homes are sometimes referred to as "landscape lighting systems", "landscape illumination systems", "garden lighting" or similar terms.

An example of an extra-low voltage outdoor lighting system is described in United States patent application publication US 2007/0222399, hereinafter referred to as "Bondy et al". This document describes a system of extra-low voltage outdoor lighting in which luminaires each have an individual control module, internal to the luminaire or external to the luminaire. The control module is connected to a power supply transformer via extra-low voltage transmission conductors.

Bondy et al. discloses an example in which the power supply transformer receives a sinusoidal voltage from the mains and transforms this into an extra-low sinusoidal AC supply voltage which is supplied to the luminaires. The control module rectifies the AC supply voltage to a rectified sinus voltage, averages the rectified voltage with a capacitor to obtain a DC voltage and then regulates that DC voltage, followed by pulse width modulating for dimming the lamps.

However, a disadvantage of this example is that, within the constraints of peak voltage and current considered safe, only a limited amount of power can be supplied.

Bondy et al. discloses an alternative example in which the control module supplies, instead of the AC supply voltage, a DC voltage (from 12 to 30 volts), such as supplied by alternate energy systems including solar power.

However, a significant disadvantage of this other example is that the extra-low voltage transmission conductors are prone to corrosion.

### Summary of the invention

The present invention provides an extra-low voltage outdoor lighting system, and a method for providing outdoor illumination as described in the accompanying claims.

Specific embodiments of the invention are set forth in the dependent claims.

These and other aspects of the invention will be apparent from and elucidated with reference to the embodiments described hereinafter.

### Brief description of the drawings

Further details, aspects and embodiments of the invention will be described, by way of example only, with reference to the drawings. In the drawings, like reference numbers are used to identify like or functionally similar elements. Elements in the figures are illustrated for simplicity and clarity and have not necessarily been drawn to scale.
- FIG. 1: shows a perspective view of an example of an outdoors scenery with an example of an extra-low voltage out-door lighting system.
- FIG. 2: shows a block diagram of an example of an extra-low voltage outdoor lighting system, suitable for the example of FIG. 1.
- FIG. 3: shows a block diagram of an example of a system power supply suitable for the system of FIG. 1.
- FIG. 4: shows a block diagram of another example .of a system power supply suitable for the system of FIG. 1.
- FIG. 5: shows a block diagram of an example of an extra-low voltage outdoor luminaire suitable for the example of FIG. 1 or FIG. 2.
- FIG. 6: shows a graph illustrating the shape of currents at different nodes in the system.

### Detailed description of the preferred embodiments

Because the illustrated embodiments of the present invention may for the most part, be implemented using electronic components and circuits known to those skilled in the art, details will not be explained in any greater extent than that considered necessary for the understanding and appreciation of the underlying concepts of the present invention and in order not to obfuscate or distract from the teachings of the present invention.

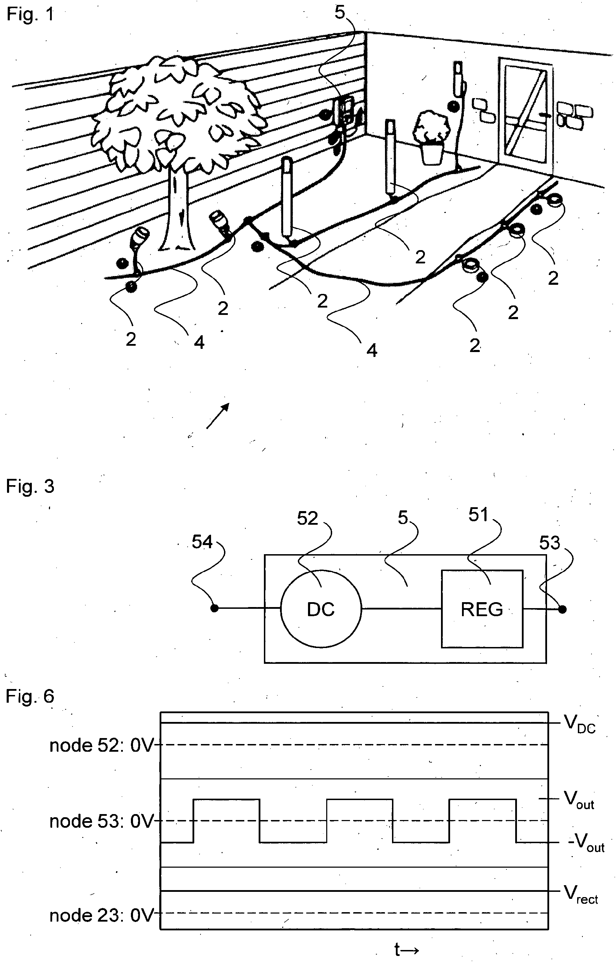

Referring to FIG. 1, an example of an extra-low voltage outdoor lighting system 1 is shown therein. As illustrated in this drawing, the extra-low voltage outdoors lighting system 1 is installed outdoors, in this example in a garden. However, other outdoor areas, such as patios or sceneries where extra-low voltage outdoor systems are suitable may be provided with a similar system.

As shown, the extra-low voltage outdoors lighting system 1 may comprise a system power supply 5 and one or more individual extra-low voltage outdoor luminaires 2 at some distance from the system power supply, e.g. between 0,1 meter and 100 meter, and typically between several decimetres up to several tens of meters. A conductor 4, such as an electrically conductive wire or cable with insulation suitable for outdoors applications, connects the system power supply 5 to the luminaire(s) 2.

When the extra-low voltage outdoors lighting system 1 is in operation, an, extra-low, supply voltage Vₛᵤₚ is supplied to the luminaire(s) 2, because the system power supply 5 generates an output voltage Vₒᵤₜ which is transferred via the conductor 4 to the luminaires 2. Thus, at desired moments, via the conductors 4, the luminaires 2 can be provided by the system power supply 5 with electrical power sufficient to generate light by the luminaires 2. Thereby the outdoors area, in this example the garden, may be illuminated by the luminaires 2 in a desired manner, e.g. for decorative and/or practical purposes.

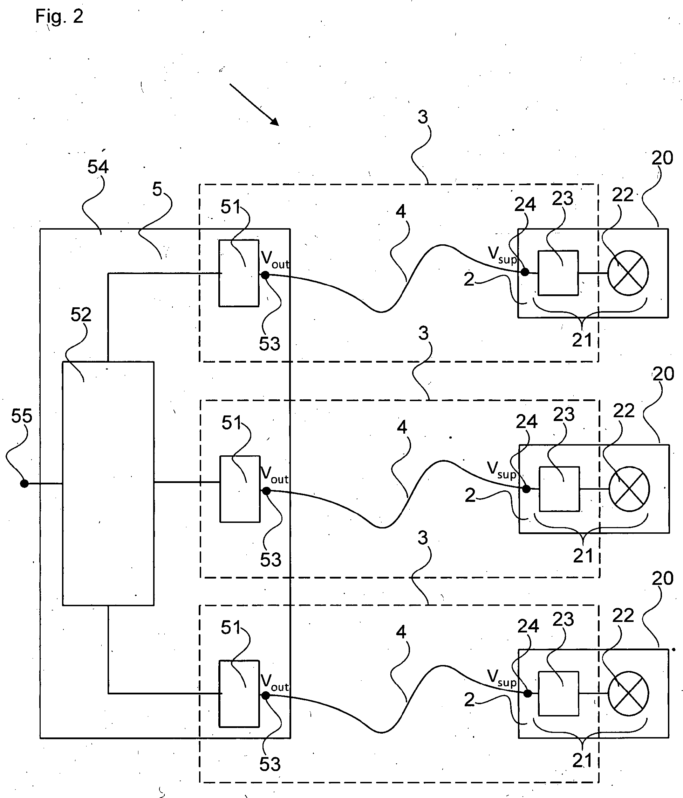

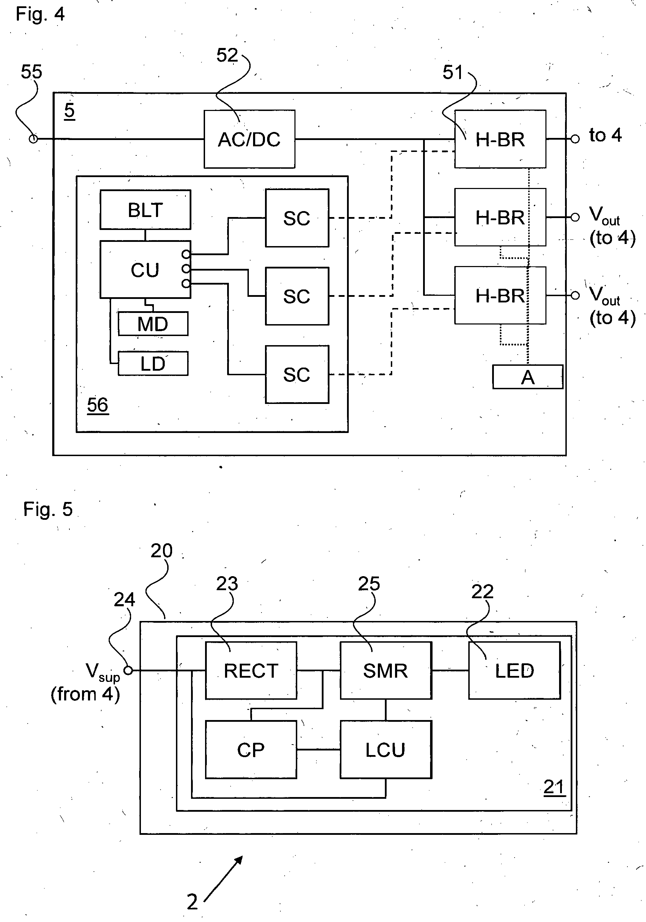

Now referring to FIG. 2, each luminaire 2 may comprise a light source 22 (e.g. light emitting diodes, LEDs, or incandescent lights). The lighting system 1 comprises a power supply assembly 3 arranged to provide power to the light source 22. The shown example of an assembly 3 comprises power supply circuitry 51 at a power supply side of the conductor 4, and rectifier circuitry 23, at a luminaire side of the conductor 4. The power supply circuitry 51 and rectifier circuit 23 are connectable to each other, in this example via conductor 4 which thus connects the power supply side of the assembly to the luminaire side. The assembly may comprise other circuitry at the power supply side and/or the luminaire side, such as regulator circuit 25 at the luminaire side in the example of FIG. 5.

As shown in more detail in FIG. 2, the system power supply 5 comprises power supply circuitry 51 in a housing 54. When in operation the power supply circuitry 51 generates a, (for practical purposes) constant DC, output voltage Vₒᵤₜ with a periodically reversing polarity. The circuitry 51 provides the output voltage Vₒᵤₜ to a supply output 53 in order to be outputted to the luminaires 2, via the conductor 4. As shown each of the luminaires 2 comprises an luminaire input at which a supply voltage Vₛᵤₚ can be received (in this example formed by a connector). In this example, the output voltage Vₒᵤₜ is transferred via the conductor 4 to the luminaire input 24, and hence the supply voltage is a (for practical purposes) constant DC supply voltage Vₛᵤₚ with a periodically reversing polarity, which in practice can be smaller than the output voltage Vₒᵤₜ due to dosses in the conductor 4. Rectifier circuitry 23 rectifies the supply voltage Vₛᵤₚ to generate a, unipolar, rectified voltage V_{rect} and provide the rectified voltage V_{rect} to the light source 22.

Because the output voltage Vₒᵤₜ and the supply voltage Vₛᵤₚ are, for practical purposes, constant DC voltages with periodically reversing polarity, the average amplitude of the supply voltage is close to the maximum amplitude thereof. Hence, for the same maximum or peak voltage, the effective value of the rectified voltage V_{rect} will be higher than in case of a rectified AC voltage. Thus, the luminaires 2 can be driven with more power, compared to a system which supplies an AC power with the same maximum voltage, or alternatively be driven with a lower maximum voltage compared to an AC supply with the same amount of power.

Additionally or alternatively, the system 1 will be less prone to corrosion compared to DC based systems (such as driven by remote solar cells or batteries at a distance from the luminaires), because the changing polarity reduces, at least partially, corroding DC electrochemical reactions. Without being bound to any theory, it is believed that a significant contribution to corrosion in outdoor lighting systems stems from electrochemical reactions triggered by a unilateral exchange of electrons between the conductor and the .surrounding substances (e.g. moisture) in contact therewith. This is effectively reduced in the system 1 because the polarity of the output voltage Vₒᵤₜ and the supply voltage Vₛᵤₚ reverses and accordingly it is less probable that electrons leak and trigger those corroding electrochemical reactions.

The extra-low output voltage Vₒᵤₜ and the extra-low supply voltage Vₛᵤₚ may have any value suitable for an extra-low voltage system, i.e. within a range which carries a low risk of dangerous electrical shocks. The extra-low output voltage Vₒᵤₜ outputted by the system power supply 5 may for example be such that, within the system 1, the maximum electrical potential between different exposed parts of the system 1, e.g. between different conductors 4, or between electrical parts and earth (ground) does not exceed 120 V. A particularly suitable voltage has been found to be with a maximum amplitude of 21.2 V.

For example, the amplitude of the output voltage Vₒᵤₜ may have a value of 10 V or more, such as 15 V or more. Thereby the voltage will be sufficiently high to power the luminaires and not have significant losses over the distance separating the system power supply 5 and the luminaires 2. The output voltage may e.g. be a safety extra low voltage-and for instance have an amplitude of equal to or less than 25 V, such as equal to or less than 21.2 V. Thereby the voltage will be such that, for practical purposes, there is almost no risk of dangerous electric shocks and accordingly the system is sufficiently safe for outdoors applications.

The output voltage Vₒᵤₜ may be higher than the breakdown voltage V_{break} of the light source 22. This allows to provide a significant amount of power to the light source. It has been found that a DC supply voltage Vₛᵤₚ with alternating polarity, with an amplitude of more than, or equal to, 11 V and/or less than or equal to 21.2 V is particularly effective for driving a 9 V LED luminaire, and allows to use a simple down-converter. However, the luminaire may be driven by a supply voltage below the voltage required by the light source by using a suitable up-converter.

In an experimental setup, a variable number (in the experiment between 1 and 10) of luminaires were connected in parallel via a cable of several tens of meters, 80 m in the set-up, and supplied with a sinoid AC voltage by a conventional power supply, and a contant DC voltage with alternating polarity by a power supply as in the example. The sinoid AC voltage and the DC voltage had the same effective voltage (21 V). The power available at the luminaires was measured as a function of the number of luminaires. The results were as shown in table 1.

**Table 1**

| # of luminaires | total power (AC voltage) | total power (DC voltage) |
|---|---|---|
| 1 | 6.95 W | 7.4 W |
| 2 | 13.8 W | 14.9 W |
| 3 | 18.1 W | 22.0 W |
| 4 | 19.6 W | 29.3 W |
| 5 | 20.2 W | 36.2 W |
| 6 | 20.9 W | 43.5 W |
| 7 | 21.2 W | 50.6 W |
| 8 | 21.3 W | 57.7 W |
| 9 | 21.4 W | 64.9 W |
| 10 | 21.4 W | 73.4 W |

As can be deduced from table 1 for the AC voltage the average power available per luminaire lowered whereas for the DC voltage this remained more or less constant. Without wishing to be bound to any theory, it is believed that this is caused by significant losses in the cable. These losses occur particularly during the short time the sinoid AC voltage peaks and charges the capacitor behind the rectifier in the luminaire, whereas for the DC voltage the charging current is continuous and hence much lower. Thus, from this experiment it can be derived that in general the constant DC output voltage and supply voltage allow to reduces losses in the conductor 4 and provide more power to the luminaires. This applies in particular to systems with multiple luminaires, and especially if more than 3 luminaires are supplied by the same power supply.

The polarity of the output voltage Vₒᵤₜ, and hence the supply voltage Vₛᵤₚ, may be changed with any frequency suitable in the specific application to effectively reduce corrosion of the conductor 4 and especially of the connections between the conductor and the electronic components of the power supply assembly 3. Preferably (but not necessarily) the frequency is as low as possible, in order to avoid undesired higher harmonic frequencies, but high enough to maintain the corrosion inhibiting effect. Although higher frequencies may be suitable, it has been found that in particular a frequency of more than 40 Hz and below 60 Hz, such as between 45 and 55 Hz, for example 50 Hz, allows to effectively reduce corrosion without generating significant undesired higher harmonics. Additionally, it has been found that such a frequency provides data-bandwidth sufficient for communication between the supply power supply 5 and luminaires based on digital modulation of the output voltage Vₒᵤₜ and hence the supply voltage Vₛᵤₚ.

For each cycle of positive and negative polarity, the supply voltage may be positive about 50% of the cycle and negative the remaining of the cycle, about 50% as well, such as shown in FIG.6. However, the supply voltage can e.g. be pulse width modulated or phase modulated by varying these percentages. If the average over several hundred or more of cycles is 50%-50% the average nett charge flow will zero. Accordingly, the charge flow is believed to not be able to trigger above mentioned electrochemical reactions. However, there may be a nett charge flow, at least per cycle, and, as long as the flow is not completely unidirectional, the corrosion triggering charge flow can be reduced, at least partially.

The system power supply 5 may be implemented in any manner suitable for the specific implementation ,of the outdoor lighting system 1. Referring to FIGs. 2 and 3, for example, the system power supply 5 may comprise a DC power source 52 with a DC voltage output. As shown in FIG. 6, the DC power source 52 provides, when in operation, an extra-low DC voltage V_{DC}. The extra-low DC voltage V_{DC} may for example be constant or be a variable voltage with a DC offset (e.g. have an average value of X V and fluctuate between X-Δ V and X+Δ V). The DC power source 52 is in this example connected with the DC voltage output to a regulator circuitry, "REG", 51. Regulator circuitry 51 periodically reverses the polarity of the DC output voltage V_{DC} to obtain a output voltage Vₒᵤₜ. The regulator circuitry 51 is connected with a regulator output 53 to the conductor 4 to output the output voltage Vₒᵤₜ.

As illustrated in FIG. 6, the differential output voltage alternates between Vₒᵤₜ and - Vₒᵤₜ. After transfer of the voltage over the conductor 4, the differential supply voltage Vₛᵤₚ varies between Vₛᵤₚ and -Vₛᵤₚ. In an ideal situation Vₒᵤₜ=Vₛᵤₚ₌V_{DC}. However, in reality losses and perturbations may be present due to the impedance of the conductor. Vₒᵤₜ may be equal to V_{DC} in which case the regulator circuitry 51 may be of a relatively simple design. However, depending on the specific implementation, the output voltage Vₒᵤₜ may be smaller or larger than the DC voltage V_{DC} and the regulator circuitry may comprise an amplifier or attenuator to step-up or step-down the voltage.

The separation between the DC power source 52 and regulator circuitry 51 provides an architecture which allows to enhance the safety of the system, by e.g. using a DC power source with built in safety features, such as IEC protection class I separation, over-voltage and/or over-current protection at its output, or other suitable features, and hence obtain a built-in, protection of the parts of the system power supply 5 and the system 1 downstream thereof, such as the regulator circuitry 51. Additionally, because of the separation, less parts of the power supply 5 are capable of damaging the system 1 in case of failure, since the regulator circuitry operates on an extra- low DC voltage and hence problems arising out of the regulator circuitry are less likely to create such damage.

Referring to FIG. 4, the power supply circuitry may comprise a DC power converter with an input connector 55 which allows to connect the power convertor to an external power supply, which is external to the housing 54. The external power supply may be of any suitable type, such as an AC or DC power supply, for instance a mains power supply, in which case the power converter may be arranged to transform an AC voltage received from the external power supply into a DC voltage. The AC voltage may for example have an effective voltage of at least 80 V and less than 300 V, which allows to use commercially available "off the shelve" DC converters to be used.

In FIG 4, for instance, the system power supply 5 comprises, as a DC power source, an AC to DC converter "AC/DC" to connect to an AC power supply. To connect to an external DC power supply, a DC/DC converter may be used.

The system power supply may comprise a control module 56 to control the DC power source 52 and/or regulator circuitry 51. Still referring to FIG. 4, for instance, the AD/DC converter outputs the DC voltage V_{DC} to the regulator circuitry 51, formed in the example by H-bridges "H-Br", such as full or half H-bridges.

The system power supply 5 may, as shown, comprise a control module 56 which controls operation of the regulator circuitry. In this example, the control module 56 comprises a control unit "CU" and slope control units "SC". The control unit "CU" controls slope control circuits "SC" which in turn control the voltage/current outputted by H-bridges. More specific in.this example the switching of the transistors in the H-bridges is controlled in such a manner that the polarity of the voltage is periodically reversed. The slope control circuits can control the H-bridges such that undesired harmonics are supressed in the output voltage Vₒᵤₜ. In this example, the output voltage consists of the uneven harmonics (of the frequency with which the polarity is reversed) up to the n-the harmonic, n being an uneven integer, and the harmonics above the n-th harmonic are supressed such as e.g. above the 7^{th}, 9^{th} or 11^{th} harmonic. Although this results in a non-perfect shape it allows in a simple manner to meet electro-magnetic compatibility requirements. Slope control circuits, H-bridges and the control thereof as such are known and not discussed in more detail.

The system power supply may comprise a data transmitter which can transmit data to the luminaires in the form of a voltage signal, as explained below in more detail. The luminaires may then comprises data receivers compatible with the data transmitter. Thereby, transfer of data and electrical energy to the luminaire can be combined and accordingly the need for implementing a separate, wired or wireless, communication channel be obviated. The data may for example be control data which controls the individual luminaires, e.g. to individually switch a luminaire "on" or "off". Thereby, a more adaptive outdoors lighting system can be provided with individual control of the luminaires without requiring individual electric power controls in the system power supply 5 for each luminaire, and the associated extensive complex wiring.

The data transmitter may for example, as in FIG. 4, be implemented as part of communication circuitry of the control module 56, for example as communication interfaces of a a microcontroller located downstream of the DC power source and programmed to control the regulator circuitry 51 and transmit data via the communication interfaces.

In the example of FIG. 4, the data transmitter is integrated in the control unit "CU" which in this example is a suitably programmed microcontroller which controls the slope control circuits, and hence the transistors in the H-bridges, to not only reverse the polarity but to also modulate a parameter of the output voltage Vₒᵤₜ, such as a frequency of the polarity reversion and/or duration of a period with a certain polarity. This modulation may e.g. result in a frequency modulated, phase modulated, or pulse width modulated output voltage. The modulation scheme may result in a remaining average duty cycle of 50%. To transmit the data, any digital modulation scheme suitable for the specific implementation may be used.

The data transmitter may be implemented in another manner, e.g. without the separation between DC power source and regulator circuitry, and for example in dedicated circuitry, e.g. up or downstream from the regulator circuitry.

One or more of the luminaires 2 may be provided with a data receiver which can extract the data from the received supply voltage Vₛᵤₚ, e.g. by sampling the modulated parameter and a predetermined mapping of values for the modulated parameter on to symbols, as is known from digital modulation techniques. The example of FIG. 5, for instance, comprises a lamp control unit LCU which receives the supply voltage Vₛᵤₚ and can extract the data from the voltage signal. The lamp control unit LCU can subsequently control the luminaire based on the information in the data and e.g. switch it on or off or execute other commands in the data.

Additionally, one or more of the luminaires 2 may comprise a communication unit for transmitting data to the system power supply. The system communication unit may likewise comprise a communication unit compatible with the communication unit at the luminaire side. Thereby, the system power supply can e.g. be informed about the status of the luminaire. The data may for example be in the form of current signals to the system power supply, which allows to communicate in the direction from the luminaire side to the power supply side and in the reverse direction at the same time, in this example because the current signal can be provided in that direction at the same time as the supply voltage (and voltage signals) are provided to the luminaire in the reverse direction. The communication may for example be implemented using protocols similar to those known from e.g. automotive networks such as the PSI5 or DSI3 bus protocols.

The control module 56 may comprise additional units. For example, the module 56 may comprise a display or other output unit to output information about the state of the converter and/or"regulator 51 in a for humans perceptible form and controls to allow a user to control the settings of the system.

In the example of FIG.4, the control unit "CU" is connected for instance to a wireless communication unit "BLT", such as a Bluetooth unit, via which the control unit can receive remote control commands and/or output relevant information to a remote control unit, such as a remote control paired with the control unit, a user's phone or other UI. For instance, the control unit "CU" may be programmed via the commands by a user to switch "on" or "off" at or after a certain time.

Also sensors may be present to activate and deactivate the system power supply automatically. In the example of FIG. 4, for instance, the control module 56 comprises sensors such as motion detector "MD" and light detector "LD", known as such, which are connected to the control unit "CU" to activate and/or deactivate the system power supply 5. For example the supply 5 may be activated if intruder or other motion is detected or deactivated if there is already sufficient ambient light from other sources, such as day light.

As shown, the example of a system power supply 5 shown in FIG. 4 further comprises a current meter "A" which measures the current outputted by the H-bridges and feeds this information back to the control unit "CU" in order for the control unit "CU" to provide input to the slope control circuits suitable to keep the power outputted by the H-bridges "H-Br" within the desired limits and to periodically change the polarity.

The luminaire 2 may be implemented in any suitable manner. As more clearly seen in FIG. 1 and schematically indicated in FIG. 5, each luminaire 2 comprises a housing 20 which protects the inside of the housing from environmental influences, and in particular shields the inside from moisture and accordingly moisture induced corrosion. Luminaire electronic circuitry 21 is present inside the housing 20. A connector 24 is present which allows to connect the luminaire electronic circuitry 21 inside the housing to the external conductor (or other electric components outside the housing 20) and hence forms the input 24 of the luminaire.

In the shown example, the luminaire electronic circuitry 21 comprises light source 22 and rectifier circuitry 23. As shown in the example, the luminaire electronic circuitry 21 may include additional circuitry to e.g. protect against over voltages or currents, short circuits, electrostatic discharges, or further shape or control the rectified voltage or otherwise. Referring to FIG. 5, the example shown therein comprises, for instance, rectifier "RECT" circuitry 23 which rectifies the received supply voltage Vₛᵤₚ and outputs a rectified voltage V_{rect} to a switch mode current regulator "SMR" or other regulator circuitry 25 which regulates the power supplied to the light source "LED". The regulator circuitry 25 allows to provide a voltage and current with a constant maximum to the light source, even when e.g. the supply voltage Vₛᵤₚ differs or varies due to the losses in the conductor 4.

The rectifier circuitry 23 may be implemented in any manner suitable for the specific implementation. The rectifier circuitry 23 may generate from the supply voltage Vₛᵤₚ a rectified voltage V_{rect}. The rectified voltage V_{rect} is thus a non-pulsed DC voltage, such as a constant DC voltage. Thereby the amount of power provided to the light source will be relatively large because the effective voltage is close to the maximum amplitude of the voltage provided. For example, the rectifier circuitry may be a full-bridge rectifier, which will change the supply voltage into a unipolar voltage, and contain additional circuitry to smoothen any glitches resulting from the polarity inversions in the supply voltage.

In this example, the switched mode current regulator regulates the current and provides a pulse width modulated current to drive a LED. However, alternatively or additionally the regulator circuitry 35 may regulate the voltage e.g. to appropriately drive an incandescent light source.

As mentioned above, the example of a luminaire 2 shown in FIG. 5 comprises a lamp control unit "LCU" which controls the light source, in this example via switch mode current regulator "SMR", to provide the desired amount of power, e.g. depending on the characteristics of the light source and/or the amount of light to be generated.

Additionally, in the shown example the lamp control unit "LCU" receives the supply voltage and can control the switch mode current regulator to compensate for (uncontrolled) fluctuations in the supply voltage and hence ensure a stable supply current and/or voltage.

The control may be more or less complex. For instance in case of the system power supply has communication capacities, the lamp control unit "LCU" may receive the supply voltage to extract data transmitted and e.g. control the light source in accordance with commands in the data. For instance, the light.source may be switched into an "on" state or "off" state in accordance with timing instructions or the amount of current be increased or reduced to produce more or less light without completely switching the light sources off.

The example of FIG. 2 may be used to perform a method of providing extra-low voltage outdoors illumination. Other systems may be suitable as well. The method may comprise generating a constant extra-low DC voltage with periodically reversing polarity and transferring the extra-low DC voltage to a luminaire. As illustrated in FIG. 6, for example a constant extra-low DC voltage V_{DC} may be generated and subsequently a polarity thereof changed to obtained the supply voltage Vₛᵤₚ. At the location of the luminaire the DC voltage may be rectified to obtain a rectified voltage V_{rect}, and show in FIG. 6 this may be a constant extra-low DC voltage. A light source in the luminaire may be provided with the rectified voltage to generate light outdoors.

In the foregoing specification, the invention has been described with reference to specific examples of embodiments of the invention. It will, however, be evident that various modifications and changes can be made therein without departing from the scope of the invention as set forth in the appended claims and that the claims are not intended to be limited to the specific examples described above.

For instance, although in the examples a star topology is shown, other topologies, e.g. tree topblogy, might likewise be suitable. Likewise, although in the examples the system power supply is provided for each luminaire 2 with a dedicated supply output 53 and regulator circuitry 51, several luminaires may share the same supply output 53 and/or regulator circuitry 51.

Likewise, although in the example Bluetooth is given as a suitable wireless communication protocol other protocols, such as Thread, Zigbee or otherwise may be used as well.

Furthermore, although in the example of FIG. 5 the light source 22 is driven by a pulse-width modulated current, other types of current such as constant, unidirectional, DC current may be suitable to drive the light source as well depending on the specific implementation and light source.

Also, although in the description an ideal system has been described with a perfectly constant DC voltage, in a practical implementation, for instance, the constant DC voltage generated by the power supply may exhibit a slow variation or similarly the rectified voltage may exhibit some ripple. For example, in a practical implementation the reversal of the polarity may not be instantaneous and the rise-time or fall-time e.g. take about 1/10^{th} of the half-cycle time. Likewise, the reversal may come with under or overshoot.

Additionally, some higher harmonics may not be present in the supply voltage because of inherent low-pass filtering characteristics or because, instead of being generated by a switched circuit like the H-bridges, the constant DC voltage with periodically reversing polarity is synthesised by adding only the first n uneven harmonics to a pure sinusoid voltage. For example, the harmonics above the 3^{rd} and/or 5^{th} and/or 7^{th} harmonic may not be present. Additionally the constant DC voltage may be interrupted periodically and e.g. during each polarity reversal the voltage be 0 V during a certain interval, such as e.g. for 1/10^{th} of the cycle time.

However, other modifications, variations and alternatives are also possible. The specifications and drawings are, accordingly, to be regarded in an illustrative rather than in a, restrictive sense.

## Claims

1. An extra-low voltage outdoor lighting system (1), comprising:
a system power supply (5) for supplying an extra-low output voltage (Vₒᵤₜ) at a supply output (53) of the system power supply (5) ;
at least one individual extra-low voltage outdoor luminaire (2), the luminaire (2) comprising:
- an luminaire input (24) for receiving a supply voltage (Vₛᵤₚ),
- a light source (22),
- and rectifier circuitry (23) between the luminaire input and the light source for rectifying the supply voltage to generate a, unipolar, rectified voltage and provide the rectified voltage to the light source (22);
the lighting system further comprising an electrical conductor (4) connecting the supply output (53) to the luminaire input, for providing electrical power from the supply output to the luminaire input,
**characterized in that**
the output voltage of the system power supply (5) has a periodically reversing polarity, wherein at each polarity the output voltage is constant.

2. The extra-low voltage outdoor lighting system (1) of claim 1, wherein the system power supply (5) comprises power supply circuitry (51,52) comprising:
a DC power source (52) with a DC voltage output for providing an extra-low DC output voltage (V_{DC}); and
regulator circuitry (51) connected to the DC voltage output, for generating the output voltage (Vₒᵤₜ) by periodically reversing the polarity of the DC output voltage, which regulator circuitry (51) has a regulator output (53) for presenting the output voltage (Vₒᵤₜ) to the conductor (4).

3. The extra-low voltage outdoor lighting system (1) of any one of the preceding claims, wherein the system power supply (5) comprises a data transmitter (CU) connected to the regulator circuitry (51) for transmitting data as a voltage signal combined with the output voltage, and at least one of the luminaires (2) comprises a data receiver (LCU) compatible with the data transmitter for extracting the data from the received voltage signal.

4. The extra-low voltage outdoor lighting system (1) of claim 3, wherein the data transmitter (CU) comprises modulation circuitry for transmitting data by modulating a parameter of the output voltage (Vₒᵤₜ), such as a frequency and/or duration of a period with a certain polarity.

5. The extra-low voltage outdoor lighting system (1) of claim 3 or 4, wherein at least one of the luminaires (2) comprises a communication unit (LCU) for transmitting data in the form of current signals to the system power supply (5) and the system power supply comprises communication unit compatible with the communication unit in the luminaire for extracting data from the current signals.

6. The extra-low voltage outdoor lighting system (1) of any one of the preceding claims, wherein at least one of the luminaires comprise a regulator ("SMR") between the rectifier circuitry (23) and the light source (22), for providing a constant current and/or voltage to the light source.

7. The extra-low voltage outdoor lighting system (1) of any one of the preceding claims, wherein the system power supply (5) comprises a power converter (AC/DC) with an input connector for connecting the power convertor to an external power supply.

8. The extra-low voltage outdoor lighting system (1) of claim 7, wherein the external power supply is an AC power supply, such as a mains power supply, and the power converter (AC/DC) is arranged to transform an AC voltage received from the external power supply into a constant DC voltage.

9. The extra-low voltage outdoor lighting system (1) of any one of the preceding claims, wherein the rectified voltage is a non-pulsed DC voltage, such as a constant DC voltage.

10. The extra-low voltage outdoor lighting system (1) of any one of the preceding claims, wherein the output voltage (Vₒᵤₜ) is a safety extra-low voltage.

11. The extra-low voltage outdoor lighting system (1) of any one of the preceding claims, wherein the amplitude of the output voltage (Vₒᵤₜ) has a value of 10 V or more, such as 15 V or more, 21.2 V for example.

12. A method of providing extra-low voltage outdoor illumination, comprising:
generating at a supply location an extra-low output voltage and outputting the output voltage to an electrical conductor (4);
transferring via the conductor (4) the electrical power to at least one extra-low voltage outdoor luminaire (2) located at a distance from the supply location;
receiving at the luminaire a supply voltage from the conductor and rectifying at the luminaire the supply voltage to obtain a rectified voltage, and
driving a light source (22) of the luminaire (2) with the rectified voltage to generate light outdoors,
**characterized by**
providing the extra-low output voltage with a periodically reversing polarity, wherein at each polarity the output voltage is constant.

## Patentansprüche

1. Ultraniederspannungsaussenbeleuchtungssystem (1), umfassend:
eine Systemstromversorgung (5) zum Liefern einer ultraniedrigen Ausgangsspannung (Vₒᵤₜ) an einem Versorgungsausgang (53) der Systemstromversorgung (5);
mindestens eine einzelne Ultraniederspannungs-Außenleuchte (2), wobei die Leuchte (2) umfasst:
- einen Leuchteneingang (24) zur Aufnahme einer Versorgungsspannung (Vₛᵤₚ)
- eine Lichtquelle (22),
- und eine Gleichrichterschaltung (23) zwischen dem Leuchteneingang und der Lichtquelle zum Gleichrichten der Versorgungsspannung, um eine unipolare, gleichgerichtete Spannung zu erzeugen und die gleichgerichtete Spannung an die Lichtquelle (22) zu liefern;
wobei das Beleuchtungssystem ferner einen elektrischen Leiter (4) umfasst, der den Versorgungsausgang (53) mit dem Leuchteneingang verbindet, um elektrische Leistung vom Versorgungsausgang zum Leuchteneingang zu liefern,
**dadurch gekennzeichnet,**
**dass** die Ausgangsspannung der Systemstromversorgung (5) eine sich periodisch umkehrende Polarität aufweist, wobei die Ausgangsspannung bei jeder Polarität konstant ist.

2. Ultraniederspannungsaussenbeleuchtungssystem (1) nach Anspruch 1, wobei die Systemstromversorgung (5) eine Stromversorgungsschaltung (51, 52) umfasst, die Folgendes umfasst:
eine Gleichstromquelle (52) mit einem Gleichspannungsausgang zum Bereitstellen einer ultraniedrigen Ausgangsgleichspannung (V_{DC}); und
eine Reglerschaltung (51), die mit dem Gleichspannungsausgang verbunden ist, um die Ausgangsspannung (Vₒᵤₜ) durch periodisches Umkehren der Polarität der Ausgangsgleichspannung zu erzeugen, wobei die Reglerschaltung (51) einen Reglerausgang (53) aufweist, um die Ausgangsspannung (Vₒᵤₜ) an den Leiter (4) zu liefern.

3. Ultraniederspannungsaussenbeleuchtungssystem (1) nach einem der vorhergehenden Ansprüche, wobei die Systemstromversorgung (5) einen Datensender (CU) umfasst, der mit der Reglerschaltung (51) verbunden ist, um Daten als ein mit der Ausgangsspannung kombiniertes Spannungssignal zu übertragen, und mindestens eine der Leuchten (2) einen Datenempfänger (LCU) umfasst, der mit dem Datensender kompatibel ist, um die Daten aus dem empfangenen Spannungssignal zu extrahieren.

4. Ultraniederspannungsaussenbeleuchtungssystem (1) nach Anspruch 3, wobei der Datensender (CU) eine Modulationsschaltung zur Übertragung von Daten durch Modulation eines Parameters der Ausgangsspannung (Vₒᵤₜ), wie etwa einer Frequenz und/oder der Dauer einer Periode mit einer bestimmten Polarität, umfasst.

5. Ultraniederspannungsaussenbeleuchtungssystem (1) nach Anspruch 3 oder 4, wobei mindestens eine der Leuchten (2) eine Kommunikationseinheit (LCU) zur Übertragung von Daten in Form von Stromsignalen an die Systemstromversorgung (5) umfasst und die Systemstromversorgung eine mit der Kommunikationseinheit in der Leuchte kompatible Kommunikationseinheit zur Extraktion von Daten aus den Stromsignalen umfasst.

6. Ultraniederspannungsaussenbeleuchtungssystem (1) nach einem der vorhergehenden Ansprüche, wobei mindestens eine der Leuchten einen Regler ("SMR") zwischen der Gleichrichterschaltung (23) und der Lichtquelle (22) aufweist, um für einen konstanten Strom und/oder eine konstante Spannung an der Lichtquelle zu sorgen.

7. Ultraniederspannungsaussenbeleuchtungssystem (1) nach einem der vorhergehenden Ansprüche, wobei die Systemstromversorgung (5) einen Leistungswandler (AC/DC) mit einem Eingangsanschluss zum Anschluss des Leistungswandlers an eine externe Stromversorgung umfasst.

8. Ultraniederspannungsaussenbeleuchtungssystem (1) nach Anspruch 7, wobei die externe Stromversorgung eine Wechselstromversorgung ist, wie etwa eine Netzstromversorgung, und der Leistungswandler (AC/DC) so angeordnet ist, dass er eine von der externen Stromversorgung empfangene Wechselspannung in eine konstante Gleichspannung umwandelt.

9. Ultraniederspannungsaussenbeleuchtungssystem (1) nach einem der vorhergehenden Ansprüche, wobei die gleichgerichtete Spannung eine nicht gepulste Gleichspannung ist, wie etwa eine konstante Gleichspannung.

10. Ultraniederspannungsaussenbeleuchtungssystem (1) nach einem der vorhergehenden Ansprüche, wobei die Ausgangsspannung (Vₒᵤₜ) eine ultraniedrige Sicherheitsspannung ist.

11. Ultraniederspannungsaussenbeleuchtungssystem (1) nach einem der vorhergehenden Ansprüche, wobei die Amplitude der Ausgangsspannung (Vₒᵤₜ) einen Wert von 10 V oder mehr aufweist, wie etwa 15 V oder mehr, beispielsweise 21,2 V.

12. Verfahren zur Bereitstellung eines Ultraniederspannungsaussenbeleuchtungssystems, umfassend:
Erzeugen einer ultraniedrigen Ausgangsspannung an einer Versorgungsstelle und Ausgeben der Ausgangsspannung an einen elektrischen Leiter (4);
Übertragen der elektrischen Leistung über den Leiter (4) zu mindestens einer Ultraniederspannung-Außenleuchte (2), die sich in einem Abstand von der Versorgungsstelle befindet;
Empfangen einer Versorgungsspannung an der Leuchte von dem Leiter und Gleichrichten der Versorgungsspannung an der Leuchte, um eine gleichgerichtete Spannung zu erhalten, und
Betreiben einer Lichtquelle (22) der Leuchte (2) mit der gleichgerichteten Spannung, um Licht im Freien zu erzeugen,
**gekennzeichnet durch**
Bereitstellen der ultraniedrigen Ausgangsspannung mit einer sich periodisch umkehrenden Polarität, wobei die Ausgangsspannung bei jeder Polarität konstant ist.

## Revendications

1. Système d'éclairage extérieur à très basse tension (1), comprenant :
une alimentation électrique de système (5) destinée à fournir une très basse tension de sortie (Vₒᵤₜ) à une sortie d'alimentation (53) de l'alimentation électrique de système (5) ;
au moins un luminaire extérieur individuel à très basse tension (2), le luminaire (2) comprenant :
- une entrée de luminaire (24) destinée à recevoir une tension d'alimentation (Vₛᵤₚ),
- une source de lumière (22),
- et des circuits de redressement (23) entre l'entrée de luminaire et la source de lumière destinés à redresser la tension d'alimentation afin de générer une tension redressée, unipolaire et de fournir la tension redressée à la source de lumière (22) ;
le système d'éclairage comprenant en outre un conducteur électrique (4) connectant la sortie d'alimentation (53) à l'entrée de luminaire, destiné à fournir une énergie électrique, de la sortie d'alimentation à l'entrée de luminaire,
**caractérisé en ce que** :
la tension de sortie de l'alimentation électrique de système (5) a une polarité s'inversant périodiquement, où à chaque polarité la tension de sortie est constante.

2. Système d'éclairage extérieur à très basse tension (1) selon la revendication 1,
dans lequel l'alimentation électrique de système (5) comprend des circuits d'alimentation électrique (51, 52) comprenant :
une source de courant continu (52) à sortie de tension en courant continu destinée à fournir une très basse tension de sortie en courant continu (V_{DC}) ; et
des circuits de régulation (51) connectés à la sortie de tension en courant continu, destinés à générer la tension de sortie (Vₒᵤₜ) en inversant périodiquement la polarité de la tension de sortie en courant continu, lesquels circuits de régulation (51) ont une sortie de régulation (53) destinée à présenter la tension de sortie (Vₒᵤₜ) au conducteur (4) .

3. Système d'éclairage extérieur à très basse tension (1) selon l'une quelconque des revendications précédentes, dans lequel l'alimentation électrique de système (5) comprend un émetteur de données (CU) connecté aux circuits de régulation (51) destiné à transmettre des données sous la forme d'un signal de tension combiné à la tension de sortie, et au moins l'un des luminaires (2) comprend un récepteur de données (LCU) compatible avec l'émetteur de données destiné à extraire les données du signal de tension reçu.

4. Système d'éclairage extérieur à très basse tension (1) selon la revendication 3, dans lequel l'émetteur de données (CU) comprend des circuits de modulation destinés à transmettre des données en modulant un paramètre de la tension de sortie (Vₒᵤₜ), tel qu'une fréquence et/ou durée d'une période avec une certaine polarité.

5. Système d'éclairage extérieur à très basse tension (1) selon la revendication 3 ou 4, dans lequel au moins l'un des luminaires (2) comprend une unité de communication (LCU) destinée à transmettre des données sous la forme de signaux de courant à l'alimentation électrique de système (5) et l'alimentation électrique de système comprend une unité de communication compatible avec l'unité de communication du luminaire destinée à extraire des données à partir des signaux de courant.

6. Système d'éclairage extérieur à très basse tension (1) selon l'une quelconque des revendications précédentes, dans lequel au moins l'un des luminaires comprend un régulateur (« SMR ») entre les circuits de redressement (23) et la source de lumière (22), destiné à fournir un courant et/ou une tension constant(e)(s) à la source de lumière.

7. Système d'éclairage extérieur à très basse tension (1) selon l'une quelconque des revendications précédentes, dans lequel l'alimentation électrique de système (5) comprend un convertisseur de puissance (alternatif-continu) doté d'un connecteur d'entrée destiné à connecter le convertisseur de puissance à une source d'alimentation externe.

8. Système d'éclairage extérieur à très basse tension (1) selon la revendication 7, dans lequel l'alimentation électrique externe est une alimentation électrique en courant alternatif, telle qu'une alimentation électrique par le secteur, et le convertisseur de puissance (alternatif-continu) est conçu afin de transformer une tension en courant alternatif reçue en provenance de l'alimentation électrique externe en une tension en courant continu constante.

9. Système d'éclairage extérieur à très basse tension (1) selon l'une quelconque des revendications précédentes, dans lequel la tension redressée est une tension en courant continu non pulsée, telle qu'une tension en courant continu constante.

10. Système d'éclairage extérieur à très basse tension (1) selon l'une quelconque des revendications précédentes, dans lequel la tension de sortie (Vₒᵤₜ) est une très basse tension de sécurité.

11. Système d'éclairage extérieur à très basse tension (1) selon l'une quelconque des revendications précédentes, dans lequel l'amplitude de la tension de sortie (Vₒᵤₜ) a une valeur supérieure ou égale à 10 V, telle que supérieure ou égale à 15 V, par exemple de 21,2 V.

12. Procédé permettant d'assurer un éclairage extérieur à très basse tension, comprenant les étapes consistant à :
générer à un emplacement d'alimentation une très basse tension de sortie et délivrer la tension de sortie à un conducteur électrique (4) ;
transférer par le biais du conducteur (4) l'énergie électrique vers au moins un luminaire extérieur à très basse tension (2) situé à distance de l'emplacement d'alimentation ;
recevoir au niveau du luminaire une tension d'alimentation en provenance du conducteur et redresser au niveau du luminaire la tension d'alimentation afin d'obtenir une tension redressée, et
commander une source de lumière (22) du luminaire (2) avec la tension redressée afin de générer de la lumière à l'extérieur,
**caractérisé par** l'étape consistant à :
fournir la très basse tension de sortie avec une polarité s'inversant périodiquement, où à chaque polarité la tension de sortie est constante.
